# EUROPÄISCHE PATENTSCHRIFT

(11) **EP 1 579 975 B1**
(45) Veröffentlichungstag und Bekanntmachung des Hinweises auf die Patenterteilung: **09.09.2009**
(21) Anmeldenummer: 05005228.1
(22) Anmeldetag: 10.03.2005
(51) Int. Cl.: B29C 45/14, B29C 37/00, E04F 15/10

(54) **Verfahren zum Herstellen von Platten aus Kunststoff und Vorrichtung zum Durchführen des Verfahrens**
Method and device for manufacturing plastic panels
Méthode et dispositif pour la fabrication des panneaux en matière plastique

(30) Priorität: 23.03.2004 DE 102004015822
(43) Veröffentlichungstag der Anmeldung: 28.09.2005
(73) Patentinhaber: SLG Kunststoff GmbH, 79872 Bernau (DE)
(72) Erfinder: Stockkamp, Dieter, 79837 St. Blasien (DE)
(74) Vertreter: Patentanwälte Ruff, Wilhelm, Beier, Dauster & Partner

(56) Entgegenhaltungen:
- DE-A1- 10 104 554
- DE-B- 1 059 173
- DE-B- 1 152 814
- DE-C1- 10 062 052
- DE-C1- 19 740 468
- DE-U1- 29 614 371
- US-A- 4 695 420
- PATENT ABSTRACTS OF JAPAN Bd. 2000, Nr. 11, 3. Januar 2001 (2001-01-03) -& JP 2000 210945 A (BRIDGESTONE CORP), 2. August 2000 (2000-08-02)
- PATENT ABSTRACTS OF JAPAN Bd. 014, Nr. 432 (M-1026), 17. September 1990 (1990-09-17) -& JP 02 171223 A (DAINIPPON PRINTING CO LTD), 2. Juli 1990 (1990-07-02)
- PATENT ABSTRACTS OF JAPAN Bd. 015, Nr. 168 (M-1107), 26. April 1991 (1991-04-26) -& JP 03 034828 A (NISSHA PRINTING CO LTD), 14. Februar 1991 (1991-02-14)

## Beschreibung

Die Erfindung betrifft ein Verfahren zum Herstellen von Bodenplatten aus Kunststoff, insbesondere für einen Industrieboden, bei welchem an ein vorgefertigtes, plattenförmiges Oberteil, das die Nutzfläche der Platte bildet, ein auf einem Boden zu verlegendes Trägerteil angespritzt wird.

Es ist aus der DE 29614371 U1 bekannt, eine Bodenplatte zu bilden, wozu an ein Element eines Fußbodenbelags ein auf einem Boden zu verlegendes Trägerteil aus recyceltem Kunststoff angespritzt wird.

Platten der eingangs genannten Art sind aus der EP 1 128 713 A1 und der EP 1 323 521 A1 bekannt. Das Oberteil, das die Nutzfläche bildet, besteht bevorzugt aus einem hoch verdichteten Kunststoffmaterial, während das Trägerteil aus einem angespritzten Kunststoff besteht, der beispielsweise auch ein recyceltes Material sein kann.

Um ein einteiliges Element aus einer oder mehreren Schreiben und einem steifen Rahmen zu bilden, beispielsweise eine Tür für eine Fahrzeugkabine, ist es aus der US 4695420 bekannt, an die vorgefertigte Scheibe den Rahmen so anzuspritzen, dass er den Rand der Scheibe einfasst. Um ein Ausbeulen der Scheibe aufgrund eines Schrumpfens des Rahmens zu verhindern, wird die Scheibe auf eine erhöhte Temperatur aufgewärmt, so dass sie sich ausdehnt und dann Scheibe und Rahmen bei Abkühlen gemeinsam schrumpfen.

Es ist auch aus der JP 5269785 bekannt, eine vorgefertigte Platte mit einem Glasanteil von 40 Gewichtsprozent in eine Formhälfte einer Form einzulegen und mittels eines Infrarotgerätes zu beheizen, so dass die Oberfläche auf 200°C aufgeheizt wird und schmilzt. Danach wird die Form geschlossen, wonach ein bei etwa 200°C schmelzender thermoplastischer Kunststoff eingespritzt wird. Auf diese Weise wird ein einteiliges Plattenelement geschaffen, bei welchem die vorgefertigte Platte die Außenseite bildet.

Der Erfindung liegt die Aufgabe zugrunde, ein Verfahren zu schaffen, mit welchem relativ großflächige Platten so hergestellt werden können, dass sie weitgehend eben sind.

Diese Aufgabe wird dadurch gelöst, dass das Trägerteil an das auf eine gegenüber Raumtemperatur erhöhte Temperatur aufgewärmte Oberteil angespritzt wird.

Die Erfindung geht von der Überlegung aus, dass ein nach dem Anspritzen des Trägerteils erfolgendes Schrumpfen des Trägerteils dazu führt, dass Spannungen in das Oberteil eingeleitet werden, die zu einem Verbiegen oder Wölben des Oberteils führen. Gemäß der Erfindung wird das Oberteil vor dem Anspritzen des Trägerteils erwärmt, so dass das Oberteil sich ausdehnt und bei dem gemeinsamen Abkühlen mit dem angespritzten Trägerteil ebenfalls einem Schrumpfungsvorgang ausgesetzt ist. Auf diese Weise ist es möglich, eine aus dem Oberteil und dem angespritzten Trägerteil zusammengesetzte Platte so herzustellen, dass zwischen den beiden Elementen keine Spannungen auftreten, die zu einer Verwerfung oder einem Wölben des Oberteils und damit der gesamten Platte führen.

In Ausgestaltung der Erfindung wird vorgesehen, dass das plattenförmige Oberteil in eine Formhälfte eines Spritzwerkzeuges, die ein Übermaß gegenüber den Außenkanten des Oberteils aufweist, eingelegt wird und in dieser Formhälfte aufgewärmt wird. Vorteilhaft ist es, wenn die Formhälfte im Bereich jeder Kante mit wenigstens einem Sensor versehen ist, der bei Anlage einer Außenkante des plattenförmigen Oberteils an die jeweilige Kante ein Anlagesignal gibt, und dass, sobald die Sensoren aller Kanten ein Anlagesignal geben, das Aufwärmen des plattenförmigen Oberteils beendet und der Spritzvorgang zum Anspritzen des Trägerteils eingeleitet wird. Bei diesem Verfahren wird gewährleistet, dass es das Oberteil durch das Erwärmen so weit ausgedehnt wird, dass es nach dem Anspritzen des Trägerteils relativ gleichmäßig mit diesem schrumpft. Dabei muss keine exakte Aufwärmtemperatur vorgegeben werden, da das Aufwärmen abhängig von der Ausdehnung des Oberteils durchgeführt wird. Toleranzen in der Dicke des Oberteils führen deshalb nicht zu einem unterschiedlichen Verhalten.

In weiterer Ausgestaltung der Erfindung wird vorgesehen, dass die Platten nach dem Anspritzen des Trägerteils aus der Form herausgenommen und in einer Presse abgekühlt werden. Damit wird sichergestellt, dass auch ein unterschiedliches Abkühlverhalten von Oberteil und Trägerteil nicht zu Verformungen der Platte führt.

Die Aufgabe wird mittels einer Vorrichtung gelöst, bei welcher eine in eine geöffnete Form einer Kunststoffspritzgießmaschine einführbare Heizeinrichtung, vorzugsweise eine Strahlungsheizeinrichtung, vorgesehen ist, die auf eine Formhälfte gerichtet ist, die zum Aufnehmen eines vorgefertigten Oberteils dient und eine Formenkontur mit Übermaß zu dem aufzunehmenden Oberteil aufweist und im Bereich ihrer Längskanten mit bei Anlage einer Außenkante des Oberteils ein Anlagesignal gebenden Sensoren versehen ist.

Weitere Merkmale und Vorteile der Erfindung ergeben sich aus der nachfolgenden Beschreibung der in den Zeichnungen dargestellten Ausführungsform und den Unteransprüchen.
- Fig. 1: zeigt in schematischer Darstellung eine Kunststoffspritzgießmaschine zum Durchführen des erfindungsgemäßen Verfahrens,
- Fig. 2: eine Ansicht von unten auf eine erfindungsgemäß hergestellte Kunststoffplatte,
- Fig. 3: die Einzelheit III der Fig. 2 in größerem Maßstab,
- Fig. 4: eine Ansicht von oben auf ein Verbindungselement der Platte nach Fig. 2 und
- Fig. 5: einen Schnitt entlang der Linie V-V der Fig. 2.

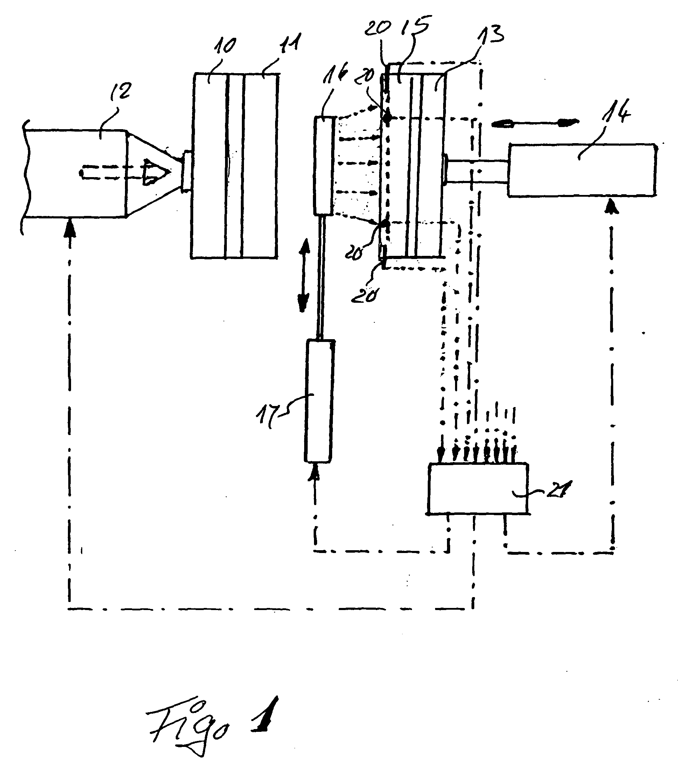

Die in Fig. 1 schematisch dargestellte Kunststoffspritzgießmaschine besitzt einen stationären Formenhalter 10, an welchem eine Formhälfte 11 angebracht ist. Der stationäre Formenhalter 10 ist mit einer Einrichtung 12 verbunden, durch welche zum Durchführen eines Spritzvorgangs Kunststoffmaterial zugeführt wird. Dem stationären Formenhalter 10 ist ein Formenhalter 13 mittels eines Antriebs 14 zustellbar, der eine zweite Formhälfte 15 trägt.

Zwischen die auseinander bewegten Formhälften 11, 15 ist eine Heizeinrichtung 16 hinein bewegbar, insbesondere eine Infrarot-Strahlungsheizeinrichtung. Diese Heizeinrichtung ist der Formhälfte 15 zugewandt. Die Heizeinrichtung 16 ist mittels eines Antriebes 17 zwischen die Formhälften 11, 15 hinein bewegbar und aus diesem Bereich wieder heraus bewegbar.

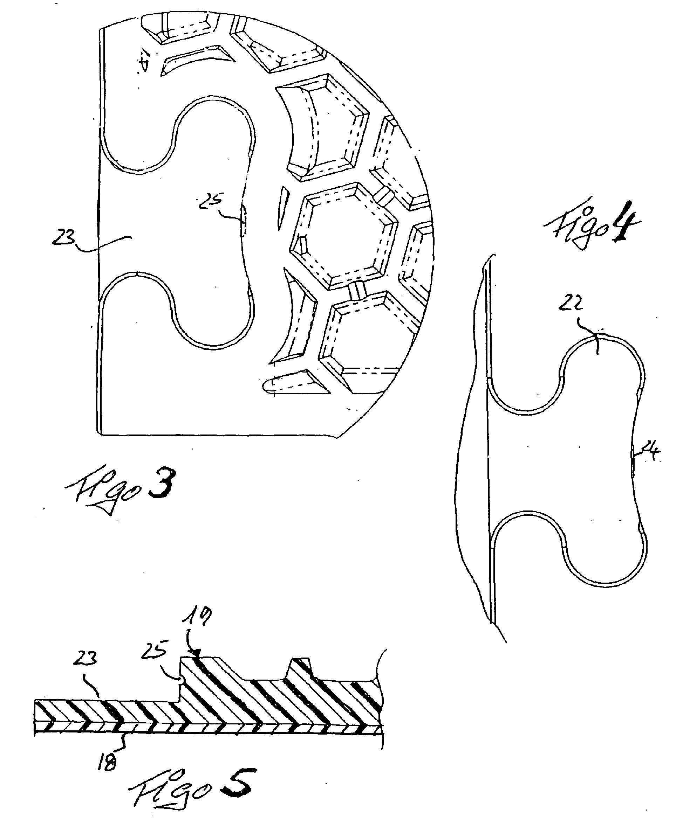

In die Formhälfte 15 ist ein plattenförmiges Oberteil einer herzustellenden Platte aus Kunststoff einsetzbar, die in der Formhälfte 15 mittels einer nicht dargestellten Einrichtung zur Erzeugung eines Vakuums gehalten wird. Die Formhälfte 15 und die Formhälfte 11 sind so gestaltet, dass an ein plattenförmiges Oberteil 18 (Fig. 5) ein zum Auflegen auf einen Boden dienendes Trägerteil 19 angespritzt wird. Das Oberteil 18 wird in die Formhälfte 15 so eingesetzt, dass es mit seiner späteren Nutzseite innen in der Formhälfte 15 liegt. An die Unterseite des Oberteils 18, die gegebenenfalls eine leichte Profilierung aufweisen kann, wird dann das Trägerteil 19 angespritzt, nachdem die Form geschlossen worden ist.

Da das Trägerteil 19 nach dem Spritzgießen beim Abkühlen einen gewissen Schrumpfungsprozess ausführt, wird das Oberteil 18, nachdem es in die Formhälfte 15 eingesetzt worden ist, erwärmt und damit ebenfalls etwas ausgedehnt, so dass es nach dem Anspritzen des Trägerteils 19 ebenfalls schrumpft.

Das Erwärmen des in die Formhälfte 15 eingesetzten Oberteils erfolgt mittels der Heizeinrichtung 16. Die Formhälfte 15 nimmt das plattenförmige Oberteil in einer Formkontur auf, die gegenüber dem plattenförmigen Oberteil 18 ein Übermaß aufweist, das an den späteren Schrumpfungsvorgang angepasst ist. Im Bereich der Außenkontur sind entlang der Längskanten Sensoren 20 angeordnet, die ein Anlagesignal abgeben, wenn das plattenförmige Oberteil 18 sich innerhalb der Formhälfte 15 so weit ausgedehnt hat, dass es an den Kanten der Ausnehmung der Formhälfte 15 anliegt. Diese Anlagesignale der Sensoren 20 werden einer Steuerschaltung 21 zugeführt. Wenn diese Steuerschaltung 21 Signale der Sensoren 20 aller Kanten der Formkontur der Formhälfte 15 empfängt, wird der Heizvorgang beendet, die Heizeinrichtung 16 mittels des Antriebes 17 zwischen den beiden Formhälften 11, 15 herausbewegt, die Form durch Zustellen der Formhälfte 15 zur Formhälfte 11 geschlossen und das Einspritzen von Kunststoffmaterial ausgelöst. Das Aufwärmen des Oberteils 18 ist somit nicht von dem Erreichen einer bestimmten Temperatur abhängig, sondern davon, dass das Oberteil 18 sich um den gewünschten Betrag ausgedehnt hat. Da nach dem Spritzen das Oberteil 18 und das angespritzte Trägerteil 19 gleichmäßig schrumpfen, wird weitgehend ausgeschlossen, dass die hergestellte Platte sich verzieht.

Um die Gefahr eines Verziehens noch weiter zu verringern, kann die noch warme Platte aus der Form herausgenommen und in eine im wesentlichen der Innenkontur der Form entsprechende Presse eingesetzt werden, in welcher das Abkühlen bis auf etwa Raumtemperatur erfolgt.

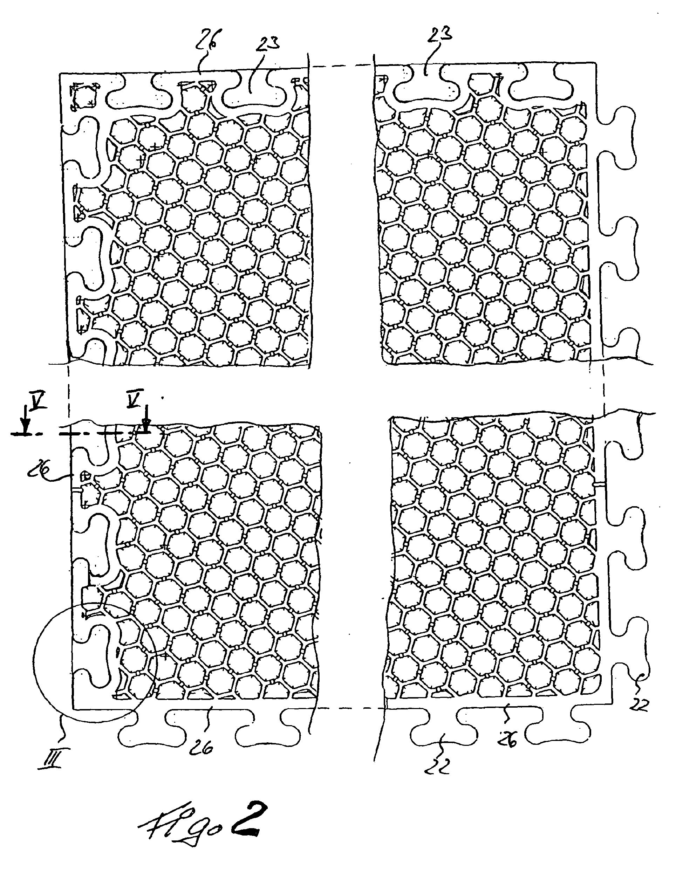

Das Oberteil 18 besitzt eine quadratische Grundfläche mit einer Kantenlänge von beispielsweise 610 mm. Das Trägerteil 19 wird so an das Oberteil 18 angespritzt, dass die Verbindung zwischen benachbarten Platten mittels des angespritzten Trägerteils erfolgt. Wie aus Fig. 2 zu ersehen ist, ist das Trägerteil an zwei aneinander anschließenden Seitenkanten mit Verbindungsvorsprüngen 22 versehen, die über die Kontur des Oberteils 18 überstehen. Die jeweils gegenüberliegenden Ränder des Trägerteils sind mit Verbindungsaussparungen 23 versehen, die in negativer Form den Verbindungsvorsprüngen 22 entsprechen. Die Verbindungsaussparungen 23 sind gegenüber den Rändern des Oberteils zurückgesetzt, so dass nach Zusammenfügen von Platten diese mit ihren Rändern aneinander stoßen. Die Verbindungsaussparungen 23 haben in etwa eine Schwalbenschwanzkontur.

Wie aus Fig. 3 und 4 zu ersehen ist, sind die Ränder des Trägerteils 19, in deren Bereich sich die Verbindungsaussparungen 23 befinden, mit einer nach innen gerichteten Fase versehen. Die Ränder des Trägerteils, von welchen die Verbindungsvorsprünge 22 abragen, sind ebenso wie die Verbindungsvorsprünge 22 mit einer nach außen gerichteten, gegensinnigen Fase versehen. Um die Verbindungsvorsprünge 22 in den Verbindungsaussparungen 23 zu verrasten, sind die Verbindungsvorsprünge 22 mit Rastnasen 24 versehen, denen Rastnasen 25 der Verbindungsaussparungen 23 zugeordnet sind.

Wie aus Fig. 5 zu ersehen ist, erstrecken sich die Verbindungsaussparungen 22 ausgehend von der Bodenseite über eine Höhe von etwa 2/3 bis 3/4 des Trägerteils 19. Das Trägerteil 19 begrenzt somit die Verbindungsaussparungen nach oben, so dass auch das Oberteil 18 im Bereich der Verbindungsaussparungen 23 auf seiner Unterseite mit dem angespritzten Kunststoffmaterial des Trägerteils 19 bedeckt ist. Die Verbindungsvorsprünge 22 erstrecken sich entsprechend von der Unterseite bis etwa 2/3 oder 3/4 der Stärke des Trägerteils 19.

Wie aus Fig. 2 zu ersehen ist, bildet das Trägerteil 19 wabenförmige Aussparungen, die nach unten offen sind. Die Ränder der wabenförmigen Aussparungen bilden die Auflagefläche, mit welcher das Trägerteil auf dem Boden aufliegt. Der Bereich der wabenförmigen Aussparungen ist mit einem umlaufenden, massiven Rand 26 umgeben, der im Bereich der Verbindungsaussparungen 23 der Kontur dieser Verbindungsaussparungen 23 folgt. Im Bereich der Verbindungsvorsprünge verläuft der massive Rand 26 parallel zu den Rändern des Oberteils 18. Wie aus Fig. 5 zu ersehen ist, sind die Innenränder des Randes so geneigt, dass sie jeweils mit einer Schrägen allmählich in die wabenförmigen Aussparungen übergehen.

Für die Kunststoffplatten ist praktisch jeder thermoplastische Kunststoff geeignet. Bevorzugt werden die Platten für Industrieböden aus PVC hergestellt, wobei das plattenförmige Oberteil aus gewalztem PVC hergestellt wird, wie dies aus der EP 1 323 521 A1 bekannt ist. Das Unterteil wird dann ebenfalls aus PVC hergestellt, wobei ein recyceltes Material eingesetzt werden kann. Um eine gewisse elektrische Leitfähigkeit zu erreichen, kann, wie dies ebenso aus der EP 1 323 521 A1 bekannt ist, zwischen dem Oberteil 18 und dem Trägerteil 19 eine elektrisch leitfähige Zwischenschicht beispielsweise in Form einer aufgeklebten oder aufkaschierten Folie oder eines Foliengitters vorgesehen werden. Die mittels Wärme und Druck aufkaschierte Folie ist vorzugsweise eine PVC-Folie, in die Ruß eingelagert ist. Um auf eine derartige Zwischenschicht verzichten zu können, ist es möglich, dem Material, aus welchem das Trägerteil 19 hergestellt wird, ein elektrisch leitendes Mittel in Form eines Pulvers o.dgl. beizufügen, insbesondere elektrisch leitenden Ruß.

## Patentansprüche

1. Verfahren zum Herstellen von Bodenplatten aus Kunststoff, insbesondere für einen Industrieboden, bei welchem an ein vorgefertigtes, plattenförmiges Oberteil (18), das die Nutzfläche der Platte bildet, ein auf einem Boden zu verlegendes Trägerteil (19) angespritzt wird, **dadurch gekennzeichnet, dass** das Trägerteil (19) an das auf eine gegenüber Raumtemperatur erhöhte Temperatur aufgewärmte und **dadurch** ausgedehnte Oberteil (18) angespritzt wird.

2. Verfahren nach Anspruch 1, **dadurch gekennzeichnet, dass** das plattenförmige Oberteil (18) in eine Formhälfte (15) eines Spritzwerkzeuges, die ein Übermaß gegenüber den Außenkanten des Oberteils aufweist, eingelegt und in dieser Formhälfte aufgewärmt wird.

3. Verfahren nach Anspruch 2, **dadurch gekennzeichnet, dass** die Formhälfte (15) im Bereich jeder Kante mit wenigstens einem Sensor (20) versehen ist, der bei Anlage einer Außenkante des plattenförmigen Oberteils an die jeweilige Längskante ein Anlagesignal abgibt und dass, sobald die Sensoren (20) aller Kanten ein Anlagesignal geben, das Aufwärmen des plattenförmigen Oberteils beendet und der Spritzvorgang zum Anspritzen des Trägerteils (19) eingeleitet wird.

4. Verfahren nach einem der Ansprüche 1 bis 3, **dadurch gekennzeichnet, dass** das plattenförmige Oberteil (18) mittels Strahlungswärme aufgewärmt wird.

5. Verfahren nach einem der Ansprüche 1 bis 4, **dadurch gekennzeichnet, dass** die Platten nach dem Anspritzen des Trägerteils (19) aus der Form herausgenommen und in einer Presse abgekühlt werden.

6. Vorrichtung zum Durchführen des Verfahrens nach einem der Ansprüche 1 bis 5, wobei eine in eine geöffnete Form einer Kunststoffspritzgießmaschine einführbare Heizeinrichtung (16), vorzugsweise eine Strahlungsheizeinrichtung, vorgesehen ist, die auf eine Formhälfte (15) gerichtet ist, die zur Aufnahme eines vorgefertigten Oberteils (18) ausgebildet ist, wobei die Formhälfte (15) eine Formkontur mit Übermaß zu dem vorgefertigten Oberteil (18) aufweist, **dadurch gekennzeichnet, daß** sie im Bereich ihrer Längskanten mit bei Anlage einer Außenkante des Oberteils (18) ein Anlagesignal gebenden Sensoren (20) versehen ist.

7. Vorrichtung nach Anspruch 6, **dadurch gekennzeichnet, dass** eine bei Vorhandensein von Anlagesignalen der Sensoren (20) aller Kanten eine Einrichtung (17) zum Herausbewegen der Heizeinrichtung (16), einer Einrichtung (14) zum Schließen der Form und eine Einrichtung (12) zum Durchführen des Spritzvorgangs steuernde Steuerschaltung (21) vorgesehen ist.

## Claims

1. Method for manufacturing plastic floor panels, in particular for an industrial floor, in which a carrier part (19) to be laid on a floor is injection moulded at a prefabricated panel-shaped upper part (18) forming the effective surface of the panel, **characterized in that** the carrier part (19) is injection moulded at the upper part (18) that is heated to a higher temperature than room temperature and thereby expanded.

2. Method according to Claim 1, **characterized in that** the panel-like upper part (18) is placed into a mould half (15) of an injection mould having an oversize relative to the outer edges of the upper part which upper part is heated inside this mould half.

3. Method according to Claim 2, **characterized in that** the mould half (15) is provided in the area of each edge with at least one sensor (20) which emits an in-contact signal when one outer edge of the panel-shaped upper part contacts the respective longitudinal edge, and **in that** the heating up of the panel-shaped upper part is terminated and the injecting process for the carrier part (19) is initiated as soon as the sensors (20) of all edges give an in-contact signal.

4. Method according to one of Claims 1 to 3, **characterized in that** the panel-shaped upper part (18) is heated up by radiant heat.

5. Method according to one of Claims 1 to 4, **characterized in that** the panels are removed from the mould after injection moulding of the carrier part (18) and cooled in a press.

6. Device for performing the method according to one of Claims 1 to 5, wherein a heating device (16) is provided, preferably a radiant heating device, which is insertable into an opened mould of an injection moulding machine and which is directed to a mould half (15) designed to receive a prefabricated upper part (18), the mould half (15) having a mould contour with an oversize relative to the prefabricated upper part (18), **characterized in that** the mould half (15) is provided in the area of its longitudinal edges with sensors (20) giving an in-contact signal when an outer edge of the upper part (18) makes contact.

7. Device according to Claim 6, **characterized in that** a control circuit (21) is provided which, when in-contact signals are given by the sensors (20) of all edges, controls a device (17) to move out the heating device (16), a device (14) to close the mould and a device (12) to perform the injection process.

## Revendications

1. Procédé de fabrication de plaques de sol en plastique, en particulier pour un sol industriel, lors duquel un élément porteur (19) à appliquer sur un sol est moulé par injection sur une partie supérieure (18) préfabriquée en forme de plaque qui forme la surface utilisable de la plaque, **caractérisé en ce que** l'élément porteur (19) est moulé par injection sur la partie supérieure (18) chauffée à une température supérieure à la température ambiante et donc dilatée.

2. Procédé selon la revendication 1, **caractérisé en ce que** la partie supérieure (18) en forme de plaque est placée dans un demi-moule (15) d'un moule à injection surdimensionné par rapport aux bords extérieurs de la partie supérieure, puis chauffée dans ce demi-moule.

3. Procédé selon la revendication 2, **caractérisé en ce que** le demi-moule (15) est pourvu, dans la zone de chaque bord, d'au moins un capteur (20) qui émet un signal de contact lorsqu'un bord extérieur de la partie supérieure en forme de plaque entre en contact avec le bord longitudinal correspondant, et **en ce que** le réchauffement de la partie supérieure en forme de plaque est arrêtée et le processus d'injection de l'élément porteur (19) est démarré, dès que les capteurs (20) de tous les bords ont émis un signal de contact.

4. Procédé selon l'une des revendications 1 à 3, **caractérisé en ce que** la partie supérieure en forme de plaque (18) est chauffée au moyen d'une chaleur rayonnante.

5. Procédé selon l'une des revendications 1 à 4, **caractérisé en ce que** les plaques sont extraites du moule après le moulage par injection de l'élément porteur (19) puis refroidies dans une presse.

6. Dispositif pour réaliser le procédé selon l'une des revendications 1 à 5, sachant qu'est prévu un dispositif de chauffage (16), de préférence un dispositif de chauffage radiant, qui peut être introduit dans un moule ouvert d'une presse d'injection de matière plastique et qui est orienté vers un demi-moule (15) conçu de manière à loger une partie supérieure (18) préfabriquée, et sachant que le demi-moule (15) présente des contours surdimensionnées par rapport à la partie supérieure (18) préfabriquée, **caractérisé en ce qu'**il est pourvu, dans la zone de ses bords longitudinaux, de capteurs (20) émettant un signal de contact lorsqu'un bord extérieur de la partie supérieure (18) est appliqué.

7. Dispositif selon la revendication 6, **caractérisé en ce qu'**est prévu un circuit de commande (21) qui, lorsque les capteurs (20) de tous les bords ont émis un signal de contact, contrôle une installation (17) pour retirer le dispositif de chauffage (16), une installation (14) pour fermer le moule et une installation (12) pour réaliser le processus de moulage par injection.
